Europäisches Patentamt

**European Patent Office**

Office européen des brevets

(19)

(11) Numéro de publication : **0 015 198 B1**

(12)

# FASCICULE DE BREVET EUROPÉEN

(45) Date de publication du fascicule du brevet :
**16.02.83**

(51) Int. Cl.³ : **C 08 L 97/02**

(21) Numéro de dépôt : **80400219.4**

(22) Date de dépôt : **15.02.80**

(54) **Procédé de réalisation d'un panneau hydrofugé non inflammable de particules lignocellulosiques agglomérées par un liant mixte phénoplaste-ciment Portland.**

(30) Priorité : **16.02.79 FR 7904208**

(43) Date de publication de la demande :
**03.09.80 Bulletin 80/18**

(45) Mention de la délivrance du brevet :
**16.02.83 Bulletin 83/07**

(84) Etats contractants désignés :
**AT BE CH DE GB IT LU NL SE**

(56) Documents cités :
**FR A 2 161 088**
**FR A 2 330 752**
**FR A 2 346 145**
**US A 2 680 102**

(73) Titulaire : **Etablissements ROUGIER & Fils**
**339, avenue de la Rochelle**
**F-79000 Niort (FR)**

(72) Inventeur : **Rouger, Serge**
**Siecq**
**F-79000 Niort (FR)**
Inventeur : **Camoisson, Eugène**
**10, rue Breuillac Laydet**
**Saint Liguaire F-79000 Niort (FR)**

(74) Mandataire : **Derambure, Christian**
**Cabinet BUGNION ASSOCIES SARL 116, boulevard Haussmann**
**F-75008 Paris (FR)**

Jouve, 18, rue St-Denis, 75001 Paris, France

**0 015 198**

Procédé de réalisation d'un panneau hydrofugé non inflammable de particules lignocellulosiques agglomérées par un liant mixte phénoplaste-ciment Portland

La présente invention concerne un procédé de réalisation d'un panneau de particules lignocellulosiques agglomérées, ignifugé et hydrofugé dans la masse, par agglomération sous presse et à chaud conjointement d'un mélange de particules lignocellulosiques et d'un liant.

Il est connu que les panneaux de particules lignocellulosiques sont le plus généralement réalisés par agglomération sous presse à chaud à l'aide d'une résine thermodurcissable soit de la classe phénoplaste dont les plus courantes sont les formophénoliques, soit de la classe aminoplaste dont les plus courantes sont les urées-formaldéhydes et les mélamine-formaldéhydes, et, dans des cas plus rares, à l'aide d'isocyanate, ou, encore plus rarement, sous presse à température modérée à l'aide de liants minéraux comme les ciments Portland et magnésien.

A l'exception des derniers cités, de tels panneaux, s'ils ne sont pas spécialement traités au cours de leur fabrication par des agents ignifugeants, présentent une combustibilité et une habilité à la propagande du feu non négligeable et, par suite, des classements au feu M.3 « moyennement inflammable » ou M.4 « facilement inflammable » selon leur épaisseur et/ou leur densité. Ils présentent donc un danger potentiel en cas d'incendie et voient leur usage de plus en plus limité dans la construction et l'agencement plus particulièrement les locaux destinés à recevoir du public.

Le cas des panneaux de particules lignocellulosiques agglomérées par un liant minéral soit du type ciment Portland, soit du type ciment magnésien, est particulier puisque le rapport du poids du liant à celui de la lignocellulose devient très important et peut être même supérieur à 2, au lieu de 0,05 à un maximum de 0,2 pour les autres cas cités. Plutôt qu'à de la lignocellulose agglomérée par un liant, on a affaire ici à un liant chargé en lignocellulose. Le matériau obtenu est donc, par sa constitution principalement minérale, bien classé en réaction au feu ; mais si le liant Portland apporte une bonne durabilité, le liant magnésien est sensible à l'humidité et limite l'utilisation du matériau correspondant à des emplois intérieurs. Dans le cas du ciment Portland, on a affaire cependant à un matériau lourd et cassant, qui n'est obtenu qu'après de longs temps de pressage et de durcissement, et à l'aide d'un matériel spécialement étudié.

Une variante a donc été proposée qui, afin de plastifier le matériau d'une part et permettre des conditions de fabrication plus classiques d'autre part, consiste à ajouter au milieu lignocellulose et ciment Portland une résine formophénolique compatible en raison de son caractère alcalin, comme celui du ciment Portland. Cependant, ce procédé présente deux désavantages ; d'une part la nécessité d'apporter une très grande quantité de résine synthétique onéreuse, d'autre part la difficulté de conserver une réaction au feu satisfaisante particulièrement en composition mono-couche.

La technique de l'ignifugation dans la masse des panneaux de particules lignocellulosiques agglomérées par des liants à base d'urée formaldéhyde et de mélanine-formaldéhyde est connue depuis plusieurs années. Elle est réalisée par l'incorporation, en cours de fabrication des panneaux, de produits chimiques divers compatibles avec les résines utilisées. Selon les procédés, l'incorporation se fait sous forme solide et/ou sous forme liquide en milieu aqueux, avec le mélange collant ou non, avant le séchage des particules ou, le plus souvent, après. Les additifs généralement utilisés sont soit les phosphates, soit l'acide borique et ses dérivés renforcés ou non par l'oxyde d'antimoine et des donneurs d'halogènes de nature minérale ou organique ; les quantités totales ainsi ajoutées pouvant osciller entre 10 % et 20 % par rapport au poids de matière lignocellulosique sèche, selon la nature des produits utilisés et le classement souhaité en réaction au feu. Les panneaux de particules ignifugés agglomérés par des résines aminoplastes sont appréciés en raison des cycles de pressage relativement brefs exigés par ce type de résine ; cependant des formulations mal étudiées sont susceptibles de donner naissance à des panneaux à caractéristiques intrinsèques atténuées et plus particulièrement à forte sensibilité à l'hydrolyse.

En variante, on connaît la technique de réalisation d'un panneau de particules de bois agglomérées par un liant aminoplaste et traitées contre le feu par l'ajout d'alumine hydratée et de paraffine chlorée.

Toutefois, l'ajout du seul hydrate d'alumine qui peut avoir un certain effet ignifugeant en milieu aminoplaste est manifestement insuffisant en milieu phénoplaste — toutes autres choses égales par ailleurs, ainsi que cela a été confirmé par l'expérience.

La technique d'ignifugation des panneaux de particules lignocellulosiques agglomérées par un liant isocyanate peut être la même en raison de la relative inertie chimique de celui-ci vis-à-vis des additifs. Cependant, outre que l'usage de ce liant présente des risques d'encrassement des matériels de fabrication et d'émanations d'isocyanate monomère toxique pendant les manipulations, il est encore onéreux et ne permet donc pas des taux d'agglomération élevés, donc la certitude d'une durabilité satisfaisante des caractéristiques du matériau.

L'ignifugation des panneaux de particules lignocellulosiques agglomérées par une résine formophénolique n'a pas été résolue jusqu'à aujourd'hui en raison du caractère alcalin de cette résine incompatible avec celui acide des additifs généralement connus. Elle est pourtant souhaitée depuis longtemps afin de pouvoir continuer à profiter des qualités éprouvées de durabilité de ce type de résine en exposition directe à l'atmosphère ou à des ambiances humides.

Le procédé objet de l'invention permet de répondre au double souci d'apporter aux panneaux liés par une résine formophénolique une ignifugation durable dans la masse et de ne pas diminuer significativement leurs caractéristiques mécaniques et physicochimiques.

Les résines phénoliques utilisées avec un rapport formol/phénol > 1 sont des résols à l'état de solution. La réaction de polycondensation, qui va les amener durant la fabrication du panneau à l'état de résitol puis de résite solide et insoluble, ne peut se produire qu'en milieu alcalin. L'incorporation d'agents ignifugeants habituels comme les phosphates d'ammonium ou l'acide borique, qui sont à caractère acide, perturberait donc la réaction.

L'incorporation recommandée par certains du seul ciment Portland, qui est à caractère basique, pourrait être une solution, mais l'expérience montre qu'il faut en mettre une quantité très importante, comme indiqué plus haut, pour observer un effet positif et répétitif vis-à-vis du feu ; effet dû non pas à une action ignifugeante du ciment, mais simplement à la proportion plus grande de produit incombustible par nature.

Le procédé objet de l'invention consiste à mélanger simultanément aux particules lignocellulosiques, soit avant l'encollage formophénolique, soit après, en combinaison d'une part, de l'hydrate d'alumine de formule $Al(OH)_3$ ou $Al_2O_3$, $3H_2O$, d'autre part, du ciment Portland.

L'hydrate d'alumine a en effet la propriété d'être amphotère et peu soluble dans l'eau : il est donc compatible avec le milieu formophénolique, n'apportera pas au panneau de sensibilité à l'eau et restera au sein du matériau toute sa vie, même au cours d'exposition à des ambiances humides. Il a par ailleurs la propriété de se décomposer vers 180 °C en alumine $Al_2O_3$ en perdant les molécules d'eau correspondantes ; l'alumine obtenue, avec sa température de fusion de 2050 °C, est le plus stable des oxydes métalliques et a, par là-même, des qualités réfractaires. Lorsque le panneau de particules lignocellulosiques agglomérées contenant l'hydrate d'alumine est soumis à l'énergie calorifique d'un incendie, l'hydrate se décompose en absorbant de la chaleur pour donner l'eau qui, à son tour, absorbe de la chaleur pour être vaporisée. L'alumine calcinée restante fait ensuite barrière à la propagation du feu.

Le ciment Portland ajouté simultanément, qui est compatible à la fois avec la résine formophénolique et l'hydrate d'alumine, permet non seulement de renforcer l'ignifugation du matériau fini, plus particulièrement en accroissant le taux de composants incombustibles par nature, mais aussi de renforcer sensiblement ses caractéristiques physico-chimiques et mécaniques ; ceci pouvant s'expliquer d'une part par le remplissage par le ciment des volumes complémentaires laissés libres entre les particules lignocellulosiques, d'autre part, par la formation d'un liant hydraulique parallèlement à celle d'un liant organique thermodurcissable. Il présente l'avantage supplémentaire, en fixant lors de sa prise une proportion de l'eau contenue dans le mélange des composants, de diminuer la tendance au soufflage des panneaux lors de leur passage sous presse à chaud.

Le procédé de réalisation d'un panneau de particules lignocellulosiques agglomérées, ignifugé et hydrofugé dans la masse, par agglomération sous presse et à chaud conjointement d'un mélange de particules lignocellulosiques et d'un liant selon l'invention est caractérisé par le fait que ledit mélange comprend :

100 parties en poids de matière lignocellulosique anhydre, de 10 à 50, de préférence 20 à 30 parties de résine phénoplaste, rapporté au poids de matière sèche, de préférence une résine formophénolique, de 5 à 120, de préférence de 30 à 60 parties en poids de ciment Portland, rapporté au poids de matière sèche, et de 5 à 150, de préférence de 40 à 70 parties en poids d'hydrate d'alumine, rapporté au poids de matières sèches.

On obtient notamment par pressage à chaud un matériau plus particulièrement destiné à la construction et possédant :
— une excellente réaction au feu de classement M.1 « non inflammable » selon la réglementation française, et de classe I selon la réglementation des Etats-Unis d'Amérique (ASTM E. 84), grâce à l'action de l'alumine hydratée en particulier ;
— un excellent comportement à l'exposition aux intempéries ou aux atmosphères très humides grâce à la résistance à l'hydrolyse de ses liants ;
— une excellente résistance aux contraintes mécaniques grâce à sa parfaite cohésion.

Les exemples suivants, dont certains illustrent la mise en œuvre du procédé, font ressortir les avantages de celui-ci sans pour autant en limiter les applications. Ils concernent des panneaux d'épaisseur finie 18 mm, fabriqués tous avec le même mélange de particules de bois caractérisé par les paramètres suivants :
— composition centésimale en poids :

| | |
|---|---|
| Bois feuillus légers | 25 |
| Bois résineux | 45 |
| Bois feuillus denses | 30 |

— épaisseur moyenne des copeaux vers : 40/100 mm
— taux de fines (de dimension < 0,8 mm) : < 20 %

| Exemple | I | II | III | IV | V |
|---|---|---|---|---|---|
| Bois anhydre | 100 | 100 | 100 | 100 | 100 |
| Ciment Portland | 275 | 120 | 150 | - | 45 |
| Hydrate d'alumine | - | - | - | 65 | 55 |
| Résine formophénolique | - | 22 | 25 | 17 | 20 |
| Pressage | A froid longue durée de durcissement | A chaud temps court | A chaud temps court | A chaud temps court | A chaud temps court |
| Densité moyenne | 1,200 | 1,300 | 1,300 | 1,100 | 1,150 |
| Réaction au feu | M.1 | M.2 | M.2-M.1 | M.1 | M.1 |
| Traction perpendiculaire (en daN/cm2) | | | | | |
| à l'origine | 4-6 | 15-20 | 15-20 | 10-12 | 14-18 |
| après test V.100 | 1-1,5 | 6-8 | 6-8 | 3-4 | 5-7 |
| après test V.313 | 2-3 | 8-10 | 8-10 | 2-3 | 7-10 |
| Résistance en flexion statique (en daN/cm2) | 130 | 300 | 300 | 230 | 270 |
| Résistance en flexion dynamique | mauvaise | assez bonne | faible | assez bonne | assez bonne |
| Faisabilité | Nécessité du matériel spécial et de longs stockages | Mauvaise Le ciment Portland utilisé seul a une mauvaise fluidité et provoque le grippage des encolleuses | | Normale Permet d'utiliser le matériel classique sans aucune modification | |

4

L'exemple I illustre le fait, d'une part, que l'agglomération des particules de bois par le seul ciment Portland nécessite des conditions de fabrication spéciales liées au durcissement très lent de ce liant hydraulique dans des atmosphères de température et d'humidité relative contrôlées — d'autre part, que le matériau obtenu, s'il a un bon classement au feu, présente une faiblesse dangereuse en essais statiques mais surtout en essais dynamiques en raison de sa mauvaise résilience.

Les exemples II et III indiquent que l'incorporation de résine formophénolique améliore la résilience et surtout la résistance à la rupture en flexion statique ainsi que la cohésion avant et après les tests de vieillissement accéléré, tout en permettant de durcir les panneaux sous presse à chaud dans des temps relativement courts ; mais que l'obtention d'un classement au feu M. 1 satisfaisant nécessite des taux de ciment incompatibles avec les conditions classiques de réalisation industrielle.

L'exemple IV montre l'intérêt de l'utilisation de l'alumine hydratée qui, tout en procurant un bon classement au feu M. 1, permet d'obtenir des valeurs correctes de cohésion avant et après vieillissement, de résistance à rupture en flexion statique et de résilience — et ne nécessite que des conditions de fabrication classiques. Toutefois, les caractéristiques physiques obtenues restent nettement inférieures à celles obtenues dans le cas de l'exemple V.

L'exemple V, qui correspond à une forme possible et non limitative de la mise en œuvre du procédé selon l'invention, fait bien apparaître tous les intérêts de celui-ci qui rassemble tous les avantages : fabrication dans des conditions absolument classiques, classement au feu M. 1 « non inflammable », valeurs de cohésion avant et après tests de vieillissement accéléré ainsi que de résistance à la rupture en flexion statique excellentes, et résilience d'un niveau normal pour un panneau de particules. La conservation de hautes valeurs de traction perpendiculaire aux faces après les tests de vieillissement accéléré est un indice de durabilité du matériau lors de l'utilisation dans des conditions climatiques dures. Cet indice est confirmé par les observations faites sur panneaux témoins exposés directement aux intempéries durant trois ans et qui font ressortir la parfaite stabilité du matériau.

Dans un cas pratique de réalisation industrielle selon l'exemple V, les conditions de fabrication ont été les suivantes :
— caractéristiques des particules de bois : identiques à celles précisées page 6
— humidité des copeaux avant encollage : 2 %
— humidité des copeaux après encollage : 13 %
— résine formophénolique à 45 % d'extrait sec et 5 % de soude (densité : 1,170)
— ciment Portland CPAL 325 (AFNOR P. 125-302)
— hydrate d'alumine sec à 99 % Al(OH)3 minimum.

Dans la résine formophénolique à 45 % on ajoute le durcisseur préalablement mis en solution à 50 % dans de l'eau tiède, à raison de 7 % en poids, puis de l'eau en quantité suffisante pour obtenir une viscosité maximale de 250 mPa · s.

Le ciment Portland et l'hydrate d'alumine sont introduits directement sous leur forme poudre dans l'encolleuse, en même temps que les particules de bois.

De la paraffine est pulvérisée, simultanément avec la colle, à l'état fondu sur les copeaux.

Le passage sous presse du matelas de particules encollées se fait à une température de 150-155 °C pendant un temps total, comprenant le dégazage, de 16 mn, avec une haute pression de 17 à 18 bars et une basse pression de 8 à 10 bars.

Cette réalisation industrielle à une haute pression relativement faible est donnée volontairement en exemple : en effet, une réalisation utilisant une haute pression de 30 à 35 bars, normalement obtenue avec le matériel moderne, permet d'obtenir des valeurs en traction perpendiculaire aux faces et en résistance à la rupture à la flexion encore plus élevées que celles annoncées ici.

Le procédé objet de l'invention permet donc d'obtenir, en utilisant, sans modification et dans des conditions ordinaires, du matériel classique existant sur les chaînes de fabrication de panneaux de particules agglomérées, un matériau de très haute qualité rassemblant le classement au feu M. 1 « non inflammable » selon la législation française, des caractéristiques physico-mécaniques élevées et durables et une facilité d'usage tout à fait satisfaisante.

Dans le procédé suivant l'invention pour 100 parties en poids de matière lignocellulosique anhydre la résine phénoplaste est ajoutée à raison de 10 à 50, et de préférence de 20 à 30 parties en poids de matière sèche ; le ciment Portland est ajouté à raison de 5 à 120, et de préférence de 30 à 60, parties en poids de matière sèche ; l'hydrate d'alumine est ajoutée à raison de 5 à 150, et de préférence de 40 à 70 parties en poids de matière sèche.

Le matériau obtenu par le procédé suivant l'invention entre aussi dans le cadre de l'invention. Il convient tout particulièrement à une utilisation dans la construction en support d'étanchéité de couverture et sous-toiture, plafonds, planchers, cloisons, doublages de murs et murs. Il s'impose dans l'agencement des locaux soumis à la réglementation Feu : locaux recevant du public, écoles, salles de spectacle, musées, bibliothèques ; laboratoires, ateliers, stands d'expositions ; passerelles d'accès d'aéroports, chaufferies ; immeubles de grande hauteur.

**Revendications**

1. Procédé de réalisation d'un panneau de particules lignocellulosiques agglomérées, ignifugé et

**0 015 198**

hydrofugé dans la masse, par agglomération sous presse et à chaud conjointement d'un mélange de particules lignocellulosiques et d'un liant, caractérisé par le fait que ledit mélange comprend :

100 parties en poids de matière lignocellulosique anhydre,

de 10 à 50, de préférence 20 à 30 parties de résine phénoplaste, rapporté au poids de matière sèche, de 5 à 120, de préférence de 30 à 60 parties en poids de ciment Portland, rapporté au poids de matière sèche et,

de 5 à 150, de préférence de 40 à 70 parties en poids d'hydrate d'alumine, rapporté au poids de matières sèches.

2. Procédé selon la revendication 1, caractérisé par le fait que la résine phénoplaste est une résine formophénolique.

**Claims**

1. Method of manufacturing a panel of agglomerated lignocellulosed particles, flame proof and water repellented into the mass by agglomeration under pressure and heat of a mixture of lignocellulosed particules with a binder, characterised by the fact that said mixture comprised :

100 parts in weight of an anhydre lignocellulosed material,

from 10 to 50, preferentially from 20 to 30 parts in weight of phenoplast resin reported to the weight of dried material,

from 5 to 120 preferentially from 30 to 60 parts in weight of Portland Ciment, reported to the weight of dried material, and

from 5 to 150 preferentially from 40 to 70 parts in weight of hydrated alumine, reported to the weight of dried material.

2. Method according to claim 1, characterized by the fact that the phenoplast resin is a formophenol resin.

**Ansprüche**

1. Verfahren für Herstellung einer flammensicheren und in die Masse wasserabstossenden Tafel von agglomerienrenden lignozellulosen Partikeln, bein Agglomerierung unter Druck und Wärme von eine Mischung lignozellulosen Partikeln und eines Bindemittels, dadurch gekennzeichnet, dass die Mischung enthält

100 Teile in Gewicht von wasserfreien Lignozellulose, von 10 zu 50, vorzugweise 20 zu 30 Teile in Gewicht von Phenoplastharz, gerechnet über das Gewicht der getrockene Stoffes,

von 5 zu 120, vorzugweise 30 zu 60 Teile in Gewicht von Portland Zement, gerechnet über das Gewicht der getrockne Stoffes, und

von 5 zu 150, vorzugweise 40 zu 70 Teile in Gewicht von Tonerdehydrat, gerechnet über das Gewicht der getrockne Stoffes.

2. Verfahren nach Anspruch 1 dadurch gekennzeichnet, dass das Phenoplastharz ist ein Phenolformolharz.

6